# EUROPEAN PATENT APPLICATION

(11) **EP 4 456 301 A1**
(43) Date of publication of application: **30.10.2024**
(21) Application number: 22953587.7
(22) Date of filing: 04.08.2022
(51) Int. Cl.: H01M 50/30, H01M 10/65

(54) **BATTERY AND ELECTRIC DEVICE**

(71) Applicant: Contemporary Amperex Technology (Hong Kong) Limited, Central, Central And Western District (HK)
(72) Inventor: LI, Yao, Ningde, Fujian 352100 (CN); CHEN, Xiaobo, Ningde, Fujian 352100 (CN)
(74) Representative: Thoma, Michael
(86) International application number: PCT/CN2022/110329
(87) International publication number: WO 2024/026778

(57) **Abstract**

Embodiments of the present application provide a battery and an electrical device. The battery includes: a box, including an electrical cavity; a battery cell accommodated in the electrical cavity, a first wall of the battery cell being provided with a pressure relief mechanism; and a discharge passage configured to be in communication with the inside of the battery cell via the pressure relief mechanism when the pressure relief mechanism is actuated. The battery satisfies: 0.05 wh/(kg • °C) ≤ a/b ≤ 25 wh/(kg • °C), where a is the gravimetric energy density of the battery cell, and b is the melting point of a target structure configured to form the discharge passage. The battery and the electrical device of the embodiments of the present application can improve the safety performance of the battery.

## Description

### Technical Field

The present application relates to the technical field of batteries, and in particular, to a battery and an electrical device.

### Background

With the continuous advancement of battery technology, various new energy industries using batteries as energy storage devices have developed rapidly. In the development of the battery technology, in addition to improving the performance of batteries, safety is also an issue that cannot be ignored. If the safety of the battery cannot be guaranteed, the battery cannot be used. Therefore, how to enhance the safety of the batteries is an urgent technical problem to be solved in the battery technology.

### Summary of The Invention

Embodiments of the present application provide a battery and an electrical device, which can improve the safety performance of the battery.

In a first aspect, a battery is provided, including: a box including an electrical cavity; a battery cell accommodated in the electrical cavity, a first wall of the battery cell being provided with a pressure relief mechanism; , and a discharge passage configured to be in communication with the inside ofthe battery cell via the pressure relief mechanism when the pressure relief mechanism is actuated; wherein the battery satisfies: 0.05 wh/(kg • °C) ≤ a/b ≤ 25 wh/(kg • °C), where a is the gravimetric energy density of the battery cell, and b is the melting point of a target structure configured to form the discharge passage.

Therefore, in the battery according to the embodiments of the present application, by rationally setting the value of a/b, emissions inside the battery cell can be discharged in a timely manner, thereby improving the safety of the battery.

If the value of a/b is too small, the melting point of the target structure is set relatively high, and the gravimetric energy density a of the battery cell is relatively small. Correspondingly, the temperature of the emissions discharged when the battery cell is subjected to thermal runaway is low. Then, it is likely that the temperature resistance of the target structure exceeds the temperature of the emissions, which will cause the emissions to be restricted around the pressure relief mechanism and cannot be further discharged through the discharge passage. If the emissions cannot be discharged in a timely manner to stay away from the region where the pressure relief mechanism is located, it is very likely to cause heat diffusion between battery cells, resulting in the risk of explosion of the battery. Therefore, the value of a/b should not be set too small.

On the contrary, the value of a/b should also not be set too large. Due to the inherent structural limitations of the battery cell, there is an upper limit for the gravimetric energy density a of the battery cell. Similarly, there is also a lower limit for the melting point b of the target structure configured to form the discharge passage. Therefore, if the value of a/b is too large, when the value of a is constant, the value of b will be too small, that is, the melting point b of the target structure forming the discharge passage is too low, which will lead to insufficient strength of the target structure. For example, since the melting point b of the target structure is too low, even if the temperature of the battery changes slightly, it is possible to cause the target structure to be melted, thereby reducing the sealing performance of the discharge passage, and even to cause the discharge passage to be damaged, affecting the discharge path of the emissions when the battery cell is subjected to thermal runaway, and reducing the safety of the battery.

In some embodiments, the battery satisfies: 0.06 wh/(kg • °C) ≤ a/b ≤ 15 wh/(kg • °C), so that the gravimetric energy density a of the battery cell is more appropriate, and the melting point b of the target structure is not too large or too small, so that it is possible to not only improve the performance of the battery cell, but also to ensure that the inside emissions can be discharged quickly in a timely manner when the battery cell is subjected to thermal runaway, improving the safety of the battery.

In some embodiments, a value range of the gravimetric energy density a of the battery cell is [100 wh/kg, 3505 wh/kg]. If the value of the gravimetric energy density a of the battery cell is too small, it will be impossible to meet the energy demand of the battery. If the value of the gravimetric energy density a of the battery cell is too large, the difficulty of manufacturing the battery cell will be increased, making it difficult to implement.

In some embodiments, a value range of the melting point b of the target structure is [100°C, 2000°C]. If the value of the melting point b of the target structure is too low, the available materials will be limited, and the strength of the target structure will also be insufficient, which may in turn lead to lower strength and poor sealing performance of the discharge passage. On the contrary, if the melting point b of the target structure is too high, the emissions from the battery cell may not be discharged through the discharge passage in a timely manner, which may in turn cause heat diffusion between battery cells and affect the safety of the battery.

In some embodiments, the electrical cavity includes a second wall, and the first wall faces the second wall. That is, the pressure relief mechanism of the battery cell faces the wall of the electrical cavity rather than other battery cells, so that it is possible to facilitate the provision of an avoidance structure on the wall of the electrical cavity for providing an avoidance space for the deformation of the pressure relief mechanism, the space utilization rate of the battery can be increased, and the risk of the battery cell that is subjected to thermal runaway causing thermal runaway in other battery cells can also be reduced, thereby improving the safety of the battery.

In some embodiments, the target structure includes the second wall. That is, the emissions discharged from the pressure relief mechanism can be discharged out of the battery cell through the second wall. In this way, by rationally setting the melting point of the second wall, the emissions discharged from the pressure relief mechanism can quickly damage the second wall and be discharged out of the battery cell, thereby improving the safety of the battery.

In some embodiments, the discharge passage includes a first passage, the first passage being configured to discharge emissions, which are discharged from the pressure relief mechanism, to the electrical cavity. If the battery includes a first passage, at least part of the emissions discharged through the pressure relief mechanism of the battery cell are discharged through the first passage to the electrical cavity where the battery cell is located. The structure is simple and easy to implement.

In some embodiments, the battery further includes: a connection structure, wherein the connection structure is arranged between the first wall and the second wall, the connection structure is configured to form part of the first passage, and the target structure includes the connection structure. The use of the connection structure to implement at least part of the first passage can achieve the relative fixation between the first wall and the second wall and the sealing between the first wall and the second wall by means of the connection structure when no battery cell is subjected to thermal runaway, and can also adjust the position of the first passage by rationally setting the specific form and position of the connection structure, so that the directional discharge of the emissions through the first passage can thus be realized, thereby improving the safety of the battery. In addition, where the target structure includes the connection structure, by rationally setting the melting point of the connection structure, the emissions passing through the pressure relief mechanism can be smoothly discharged through at least part of the first passage formed by the connection structure, thereby improving the safety of the battery.

In some embodiments, the connection structure is provided with a flow channel, and the first passage includes the flow channel. The emissions discharged through the pressure relief mechanism can be discharged into the electrical cavity through the flow channel, so that by rationally arranging the position of the flow channel, directional discharge of the emissions can be realized, to reduce the influence of the emissions on individual components inside the electrical cavity, thereby improving the safety of the battery.

In some embodiments, the connection structure is configured to be damaged when the pressure relief mechanism is actuated, so as to form a gap between the first wall and the second wall, and the first passage includes the gap. In this way, the target structure configured to form the first passage may include the connection member, and by rationally selecting the material of the connection structure to obtain the appropriate melting point of the connection structure, the connection structure can be damaged when the pressure relief mechanism is actuated, to form a gap, so as to form the first passage. It is possible to provide no additional structures on the connection structure, which is more convenient, and also to ensure the sealing of the battery cell during normal use.

In some embodiments, the connection structure is provided with an avoidance opening corresponding to the pressure relief mechanism, the avoidance opening being configured to provide a deformation space for the pressure relief mechanism when the pressure relief mechanism is actuated, so as to avoid untimely actuation of the pressure relief mechanism caused by the connection structure blocking the pressure relief mechanism, and the emissions passing through the pressure relief mechanism can be quickly discharged through the avoidance opening.

In some embodiments, the discharge passage includes a second passage, the second passage being configured to discharge the emissions, which are discharged from the pressure relief mechanism, out of the electrical cavity.

In some embodiments, the second wall is provided with a pressure relief region corresponding to the pressure relief mechanism, the pressure relief region being configured to form at least part of the second passage. The second wall is a wall of the electrical cavity, and the emissions discharged through the pressure relief mechanism can be discharged out of the electrical cavity through the pressure relief region of the second wall, that is, the pressure relief region is at least part of the second passage to discharge the emissions. For example, the emissions may be discharged to the collection cavity to prevent a large amount of emissions from entering the electrical cavity, which would otherwise cause a short circuit or heat diffusion between battery cells and thus affect the safety of the battery.

In some embodiments, the pressure relief region is a through hole penetrating the second wall in a penetrating direction which is a thickness direction of the second wall, and the second passage includes the through hole. When the pressure relief region is a through hole, the machining is facilitated, and the emissions discharged through the pressure relief mechanism can be also released quickly. However, when the pressure relief region is a through hole, the pressure relief mechanism is exposed as a result. Then, during the use of the battery, the pressure relief mechanism is likely to be affected by the external environment, which may in turn cause the pressure relief mechanism to fail.

In some embodiments, the battery further includes: a sealing structure, wherein the sealing structure is configured to seal the through hole, the sealing structure is configured to be damaged when the pressure relief mechanism is actuated, such that the through hole forms at least part of the second passage, and the target structure includes the sealing structure. When the pressure relief region is a through hole, by rationally setting the melting point of the sealing structure, it is possible to maintain the sealing of the electrical cavity during the normal use of the battery cell, to protect the pressure relief mechanism from being affected by the external environment; and when a battery cell is subjected to thermal runaway, the sealing structure can be damaged in a timely manner to expose the through hole and form the second passage, and the emissions from the battery cell then pass through the through hole and are discharged out of the electrical cavity, thereby avoiding thermal runaway and improving the safety of the battery.

In some embodiments, the sealing structure is provided on a surface of the second wall facing the first wall, and/or the sealing structure is provided on a surface of the second wall away from the first wall. When the sealing structure is provided on the surface of the second wall facing the first wall, the sealing structure is relatively close to the pressure relief mechanism and can be quickly damaged by the emissions from the pressure relief mechanism to avoid affecting the actuation of the pressure relief mechanism, and the emissions can be discharged to the collection cavity in a timely manner. When the sealing structure is provided on the surface of the second wall away from the first wall, the distance between the pressure relief mechanism and the sealing structure can provide a deformation space for the actuation of the pressure relief mechanism, avoiding affecting the pressure relief mechanism.

In some embodiments, the pressure relief region is a weak region of the second wall, the weak region being configured to be damaged when the pressure relief mechanism is actuated, so as to form at least part of the second passage. When the pressure relief mechanism is actuated, the weak region can be damaged, so that the emissions from the battery cell provided with the pressure relief mechanism are discharged out of the electrical cavity through the weak region, for example, may pass through the weak region into the collection cavity. Configuring the pressure relief region as a weak region can also make the second wall in a sealed state when the pressure relief mechanism is not actuated, for example, during normal use of the battery, effectively protecting the pressure relief mechanism from being damaged and failing due to external force. When a battery cell is subjected to thermal runaway, the pressure relief mechanism can be damaged in a timely manner to discharge the emissions out of the electrical cavity to avoid thermal runaway and improve the safety of the battery.

In some embodiments, the target structure includes the weak region, the melting point of the weak region can then be rationally set such that the weak region has a sufficient strength to maintain the sealing of the electrical cavity during normal use of the battery cell, to protect the pressure relief mechanism from being affected by the external environment; and when the battery cell is subjected to thermal runaway, the weak region can be damaged in a timely manner, for example, melted in a timely manner, to form the second passage, and the emissions from the battery cell are then discharged out of the electrical cavity through the damaged pressure relief region, thereby avoiding thermal runaway and improving the safety of the battery.

In some embodiments, the thickness of the weak region is less than the thickness of a region of the second wall that is located around the weak region. The strength of the weak region is reduced by reducing the thickness thereof, such that the emissions can quickly damage the weak region by means of melting and breaking, and the emissions can be discharged in a timely manner.

In some embodiments, the second wall is provided with a groove, which corresponds to the pressure relief mechanism and has an opening facing the pressure relief mechanism, and the weak region is a bottom wall of the groove. In this way, the opening of the groove corresponds to the pressure relief mechanism, and the inside of the groove can provide a deformation space for the pressure relief mechanism; and the bottom wall is configured as a weak region to facilitate machining.

In some embodiments, the box further includes: a collection cavity configured to collect the emissions discharged through the second passage when the pressure relief mechanism is actuated. The collection cavity can collect and/or process the emissions in a centralized manner, and the emissions are then discharged to the outside of the battery. For example, the collection cavity may contain liquid, such as a cooling medium, or a component for accommodating the liquid is provided to further cool the emissions entering the collection cavity.

In some embodiments, the battery further includes: an isolation component configured to isolate the electrical cavity from the collection cavity. The isolation component is used to isolate the electrical cavity from the collection cavity, that is, the electrical cavity for accommodating the battery cell and a bus component is separated from the collection cavity for collecting the emissions to avoid mutual influence between the two.

In some embodiments, the isolation component is configured to form at least part of the second passage. In this way, the emissions passing through the pressure relief mechanism can be discharged out of the electrical cavity through the isolation component, for example, directly discharged to the collection cavity.

In a second aspect, provided is an electrical device, including the battery described in the first aspect, the battery being configured to supply electric energy to the electrical device.

In some embodiments, the electrical device is a vehicle, a ship or a spacecraft.

### Description of Drawings

Fig. 1 is a schematic structural diagram of a vehicle disclosed in an embodiment of the present application;
Fig. 2 is a schematic structural diagram of a battery disclosed in an embodiment of the present application;
Fig. 3 is a schematic structural diagram of a further battery disclosed in an embodiment of the present application;
Fig. 4 is an exploded schematic structural diagram of a battery disclosed in an embodiment of the present application;
Fig. 5 is a partial schematic structural diagram of a battery disclosed in an embodiment of the present application;
Fig. 6 is a schematic structural diagram of a still further battery disclosed in an embodiment of the present application;
Fig. 7 is a schematic structural diagram of a yet further battery disclosed in an embodiment of the present application; and
Fig. 8 is a schematic structural diagram ofa still yet further battery disclosed in an embodiment of the present application.

In the accompanying drawings, the figures are not necessarily drawn to scale.

### Detailed Description

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of' means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, a cuboid shape or another shape, which is also not limited in the embodiments of the present application. The battery cells are generally classified into three types depending on the way of encapsulating manners: cylindrical cells, prismatic cells and pouch cells, which will also not be limited in the embodiments of the present application.

The battery mentioned in the embodiments ofthe present application refers to a single physical module including one or more battery cells to provide a higher voltage and capacity. For example, the battery mentioned in the present application may include a battery module or a battery pack, etc. The battery generally includes a box for encapsulating one or more battery cells. The box can prevent liquid or other foreign matters from affecting charging or discharging ofthe battery cells.

The battery cell includes an electrode assembly and an electrolytic solution, and the electrode assembly is composed of a positive electrode plate, a negative electrode plate and an separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be made of polypropylene (PP), polyethylene (PE), etc. In addition, the electrode assembly may have a wound structure or a laminated structure, and the embodiments of the present application are not limited thereto.

With the development of the battery technology, it is necessary to consider many design factors, such as energy density, cycle life, discharge capacity, C-rate and other performance parameters. In addition, the safety of the battery should also be considered. For the battery, the main safety hazard comes from the charging and discharging processes. In order to improve the safety performance of the battery, a pressure relief mechanism is generally provided for the battery cell. The pressure relief mechanism refers to an element or component that is actuated to relieve an internal pressure or heat when the internal pressure or temperature of the battery cell reaches a predetermined threshold. The predetermined threshold may be adjusted according to different design requirements. For example, the predetermined threshold may depend on the material of one or more of the positive electrode plate, the negative electrode plate, the electrolytic solution and the separator in the battery cell. The pressure relief mechanism may take the form of an element or component that is sensitive to pressure or temperature, for example. That is, when the internal pressure or temperature of the battery cell reaches a predetermined threshold, the pressure relief mechanism is actuated, thereby creating a channel through which the internal pressure or heat can be relieved.

In the current design solutions of the pressure relief mechanism, the main concern is to release the high pressure and high heat from the inside of the battery cell, i.e., to discharge emissions from the battery cell to the outside of the battery cell through the pressure relief mechanism. However, how to configure the discharge path for the high-temperature and high-pressure emissions after they are discharged from the battery cell such that the emissions can be discharged in a timely and smooth manner to avoid causing further safety problems to the battery is one of the urgent problems that need to be solved nowadays.

Therefore, embodiments of the present application provide a battery and an electrical device, which can solve the above problems. The battery of the embodiments of the present application includes a box, a battery cell and a discharge passage. The battery cell is accommodated in an electrical cavity of the box. A first wall of the battery cell is provided with a pressure relief mechanism. The discharge passage can be connected to the inside of the battery cell via the pressure relief mechanism when the pressure relief mechanism is actuated, so that emissions inside the battery cell can be discharged through the pressure relief mechanism and the discharge passage. The battery satisfies: 0.05 wh/(kg • °C) ≤ a/b ≤ 25 wh/(kg • °C), where a is the gravimetric energy density of the battery cell, and b is the melting point of a target structure configured to form the discharge passage. If the value of a/b is too small, the melting point of the target structure is set relatively high, and the gravimetric energy density of the battery cell is relatively small. Correspondingly, the temperature of the emissions discharged when the battery cell is subjected to thermal runaway is low. Then, it is likely that the temperature resistance of the target structure exceeds the temperature of the emissions, which will cause the emissions to be restricted around the pressure relief mechanism and cannot be further discharged through the discharge passage. If the emissions cannot be discharged in a timely manner to stay away from the region where the pressure relief mechanism is located, it is very likely to cause heat diffusion between battery cells, resulting in the risk of explosion of the battery. Therefore, the value of a/b should not be set too small.

On the contrary, the value of a/b should also not be set too large. Due to the inherent structural limitations of the battery cell, there is an upper limit for the gravimetric energy density of the battery cell. Similarly, there is also a lower limit for the melting point of the target structure configured to form the discharge passage. Therefore, if the value of a/b is too large, when the value of a is constant, the value of b will be too small, that is, the melting point b of the target structure forming the discharge passage is too low, which will lead to insufficient strength of the target structure. For example, since the melting point b of the target structure is too low, even if the temperature of the battery changes slightly, it is possible to cause the target structure to be melted, thereby reducing the sealing performance of the discharge passage, and even to cause the discharge passage to be damaged, affecting the discharge path of the emissions when the battery cell is subjected to thermal runaway, and reducing the safety of the battery. Therefore, the value of a/b in the embodiments of the present application should not be set too large or too small.

The technical solutions described in the embodiments of the present application are applicable to various electrical devices using batteries.

The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric cartoys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

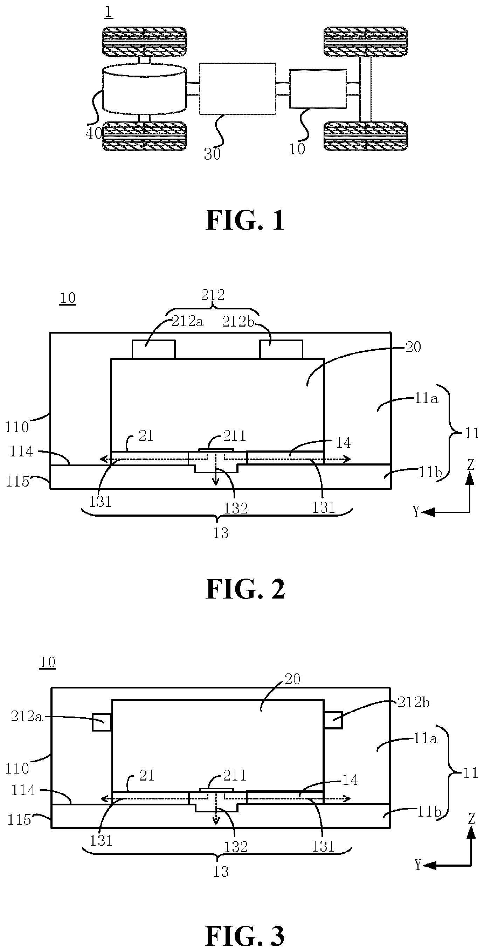

For example, Fig. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended-range electric vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells, wherein the plurality of battery cells may be in series connection, parallel connection or parallel-series connection. The parallel-series connection refers to a combination of series connection and parallel connection. The battery may also be called a battery pack. For example, the plurality of battery cells may be in series, parallel or parallel-series connection to form battery modules first, and then the plurality of battery modules may be in series, parallel or parallel-series connection to form the battery. That is, a plurality of battery cells may directly form a battery, or may first form battery modules, and then the battery modules form a battery.

Fig. 2 is a schematic structural diagram of a battery 10 according to an embodiment of the present application. As shown in Fig. 2, the battery 10 may include: a box 11, including an electrical cavity 11a; a battery cell 20 accommodated in the electrical cavity 11a, a first wall 21 of the battery cell 20 being provided with a pressure relief mechanism 211; and a discharge passage 13 configured to be in communication with the inside of the battery cell 20 via the pressure relief mechanism 211 when the pressure relief mechanism 211 is actuated. The battery satisfies: 0.05 wh/(kg • °C) ≤ a/b ≤ 25 wh/(kg • °C), where a is the gravimetric energy density of the battery cell 20, and b is the melting point of a target structure configured to form the discharge passage 13.

It should be understood that as shown in Fig. 2, the electrical cavity 11a of the box 11 of the embodiments of the present application is configured to accommodate at least one battery cell 20, that is, the electrical cavity 11a provides a mounting space for the battery cell 20. The electrical cavity 11a may be sealed or unsealed. The shape of the electrical cavity 11a may be determined according to the one or more battery cells 20 accommodated therein. For example, in Fig. 2, the electrical cavity 11a is a cuboid as an example, but the embodiments of the present application are not limited thereto.

It should be understood that the pressure relief mechanism 211 in the embodiments of the present application is configured to be actuated when an internal pressure or temperature of the battery cell 20 reaches a predetermined threshold so as to relieve the internal pressure or heat. The value of this threshold can vary according to different design requirements. The threshold may depend on the material of one or more of the positive electrode plate, the negative electrode plate, the electrolytic solution and the separator in the battery cell 20.

The "actuation" mentioned in the present application means that the pressure relief mechanism 211 acts or is activated to a certain state, such that the internal pressure and heat of the battery cell 20 can be relieved. The action generated by the pressure relief mechanism 211 may include, but not limited to, at least part of the pressure relief mechanism 211 being fractured, broken, tom or opened. When the pressure relief mechanism 211 is actuated, high-temperature and high-pressure substances inside the battery cell 20 are discharged outward from an actuated position as emissions. In this way, the pressure and heat in the battery cell 20 can be released at a controllable pressure or temperature, thereby avoiding more serious potential accidents.

The emissions from the battery cell 20 mentioned in the present application include, but are not limited to: an electrolytic solution, dissolved or split positive and negative electrode plates, fragments of a separator, high-temperature and high-pressure gas generated by reaction, flames, etc.

The pressure relief mechanism 211 of the embodiments of the present application is arranged at the first wall 21 of the battery cell 20. The pressure relief mechanism 211 may be part of the first wall 21 or may be a separate structure from the first wall 21 and fixed to the first wall 21 by welding, for example. For example, when the pressure relief mechanism 211 is part of the first wall 21, e.g., the pressure relief mechanism 211 may be formed by providing an indentation on the first wall 21, and the thickness of the first wall 21 corresponding to the indentation is less than that of other regions of the pressure relief mechanism 211 except the indentation. The indentation is the weakest position of the pressure relief mechanism 211. When excessive gas generated by the battery cell 20 causes the internal pressure to rise and reach a threshold, or the internal temperature of the battery cell 20 rises and reaches a threshold due to the heat generated by the internal reaction of the battery cell 20, the pressure relief mechanism 211 can be fractured at the indentation, resulting in the communication between the inside and outside of the battery elevator 20. The gas pressure and heat are released outward through the cracking of the pressure relief mechanism 211, thereby preventing the battery cell 20 from exploding.

For another example, the pressure relief mechanism 211 may be a separate structure from the first wall 21. The pressure relief mechanism 211 may take the form of an anti-explosion valve, an air valve, a pressure relief valve or a safety valve, etc., and may specifically adopt a pressure-sensitive or temperaturesensitive element or structure. That is, when the internal pressure or temperature of the battery cell 20 reaches a predetermined threshold, the pressure relief mechanism 211 performs an action or a weak structure provided in the pressure relief mechanism 211 is damaged, so as to form an opening or channel for releasing the internal pressure or heat.

In the embodiments of the present application, the battery 10 satisfies: 0.05 wh/(kg • °C) ≤ a/b ≤ 25 wh/(kg • °C), where a is the gravimetric energy density of the battery cell, and b is the melting point of a target structure configured to form the discharge passage. By rationally setting the value of a/b, the emissions inside the battery cell 20 can be discharged in a timely manner, thereby improving the safety of the battery 10.

If the value of a/b is too small, the melting point of the target structure is set relatively high, and the gravimetric energy density a of the battery cell 20 is relatively small. Correspondingly, the temperature of the emissions discharged when the battery cell 20 is subjected to thermal runaway is low. Then, it is likely that the temperature resistance of the target structure exceeds the temperature of the emissions, which will cause the emissions to be restricted around the pressure relief mechanism 211 and cannot be further discharged through the discharge passage 13. If the emissions cannot be discharged in a timely manner to stay away from the region where the pressure relief mechanism 211 is located, it is very likely to cause heat diffusion between battery cells 20, resulting in the risk of explosion of the battery 10. Therefore, the value of a/b should not be set too small.

On the contrary, the value of a/b should also not be set too large. Due to the inherent structural limitations of the battery cell 20, there is an upper limit for the gravimetric energy density a of the battery cell 20. Similarly, there is also a lower limit for the melting point b of the target structure configured to form the discharge passage. Therefore, if the value of a/b is too large, when the value of a is constant, the value of b will be too small, that is, the melting point b of the target structure forming the discharge passage 13 is too low, which will lead to insufficient strength of the target structure. For example, since the melting point b of the target structure is too low, even if the temperature of the battery 10 changes slightly, it is possible to cause the target structure to be melted, thereby reducing the sealing reliability of the discharge passage 13, and even to cause the discharge passage 13 to be damaged, affecting the discharge path of the emissions when the battery cell 20 is subjected to thermal runaway, and reducing the safety of the battery 10.

Therefore, the value of a/b in the embodiments of the present application should not be set too large or too small. For example, the value of a/b may be set to: 0.05 wh/(kg • °C), 0.06 wh/(kg • °C), 0.08 wh/(kg • °C), 0.1 wh/(kg • °C), 0.18 wh/(kg • °C), 0.4 wh/(kg • °C), 0.5 wh/(kg • °C), 0.64 wh/(kg • °C), 1 wh/(kg • °C), 1.4 wh/(kg • °C), 3 wh/(kg • °C), 5 wh/(kg • °C), 7 wh/(kg • °C), 9 wh/(kg • °C), 11 wh/(kg • °C), 13 wh/(kg • °C), 15 wh/(kg • °C), 17 wh/(kg • °C), 19 wh/(kg • °C), 21 wh/(kg • °C), 23 wh/(kg • °C) or 25 wh/(kg • °C).

For example, the battery 10 satisfies 0.06 wh/(kg • °C) ≤ a/b ≤ 15 wh/(kg • °C), so that the gravimetric energy density a of the battery cell 20 is more appropriate, and the melting point b of the target structure is not too large or too small, so that it is possible to not only improve the performance of the battery cell 20, but also to ensure that the inside emissions can be discharged quickly in a timely manner when the battery cell 20 is subjected to thermal runaway, improving the safety of the battery 10.

The value of the gravimetric energy density a of the battery cell 20 in the embodiments of the present application may be set according to the actual application. For example, a value range of the gravimetric energy density a of the battery cell 20 is [100 wh/kg, 3505 wh/kg]. If the value ofthe gravimetric energy density a of the battery cell 20 is too small, it will be impossible to meet the energy demand of the battery 10. If the value of the gravimetric energy density a of the battery cell 20 is too large, the difficulty of manufacturing the battery cell 20 will be increased, making it difficult to implement. Therefore, the gravimetric energy density a of the battery cell 20 may generally be set to 100 wh/kg, 120 wh/kg, 150 wh/kg, 200 wh/kg, 250 wh/kg, 300 wh/kg, 350 wh/kg, 400 wh/kg, 420 wh/ kg, 450 wh/kg, 500 wh/kg, 800 wh/kg, 1000 wh/kg, 1500 wh/kg, 2000 wh/kg, 2500 wh/kg or 3505 wh/kg. For example, considering the performance and manufacturing difficulty of the battery 10, the value range of the gravimetric energy density a of the battery cell 20 may be set to [100 wh/kg, 1500 wh/kg].

The value of the melting point b of the target structure of the battery 10 in the embodiments of the present application may be set according to the actual application. For example, a value range of the melting point b of the target structure is [100°C, 2000°C]. If the value of the melting point b of the target structure is too low, the available materials will be limited, and the strength of the target structure will also be insufficient, which may in turn lead to lower strength and poor sealing performance of the discharge passage. On the contrary, if the melting point b of the target structure is too high, the emissions from the battery cell 20 may not be discharged through the discharge passage 13 in a timely manner, which may in turn cause heat diffusion between battery cells 20 and affect the safety of the battery 10. Therefore, the melting point b of the target structure may generally be set to 100°C, 200°C, 300°C, 400°C, 500°C, 600°C, 660°C, 700°C, 800°C, 900°C, 1000°C, 1200°C, 1400°C, 1500°C, 1600°C, 1700°C, 1800°C or 2000°C. For another example, considering the temperature of the emissions discharged when the battery cell 20 is subjected to thermal runaway, the value range of the melting point b of the target structure may be set to [100°C, 1700°C].

The discharge passage 13 and the target structure of the embodiments of the present application will be described below by way of example with reference to the accompanying drawings.

In the embodiments of the present application, as shown in FIG. 2, the electrical cavity 11a of the embodiments of the present application may also be configured to accommodate other components, for example, it may be configured to accommodate a bus component 30. That is, the electrical cavity 11a provides a mounting space for the battery cell 20 and the bus component 30. The bus component 30 is configured to implement the electrical connection between a plurality of battery cells 20, such as parallel connection, series connection or parallel-series connection. The bus component 30 may implement the electrical connection between the battery cells 20 by connecting electrode terminals 212 of the battery cells 20. In some embodiments, the bus component 30 may be fixed to the electrode terminals 212 of the battery cells 20 by welding.

Each battery cell 20 of the embodiments of the present application may include at least two electrode terminals 212. The at least two electrode terminals 212 respectively include at least one positive electrode terminal 212a and at least one negative electrode terminal 212b. The electrode terminals 212 of the embodiments of the present application are configured to electrically connect to tabs of the electrode assembly inside the battery cell 20 to output electrical energy.

It should be understood that, each electrode terminal 212 of the embodiments of the present application may be provided on any wall, and a plurality of electrode terminals 212 may be provided on the same wall or on different walls of the battery cell 20. For example, as shown in Fig. 2, taking an example in which each battery cell 20 includes two electrode terminals 212, the two electrode terminals 212 may be located on the same wall. Specifically, as shown in Fig. 2, the two electrode terminals 212 may be located on the wall opposite to the first wall 21, so that when the pressure relief mechanism 211 of the first wall 21 is actuated, the two electrode terminals 212 will not be affected, or the influence on the two electrode terminals 212 is small, to avoid the short circuit between battery cells 20. Alternatively, the two electrode terminals 212 may be located on another wall, and the embodiments of the present application are not limited thereto.

For another example, taking an example in which each battery cell 20 includes two electrode terminals 212 again, different from what is shown in Fig. 2, the two electrode terminals 212 may be located on different walls. Fig. 3 shows another schematic structural diagram of a battery 10 according to an embodiment of the present application. As shown in Fig. 3, the two electrode terminals 212 of the battery cell 20 may be respectively located on two opposite walls of the battery cell 20. Alternatively, the two electrode terminals 212 of the battery cell 20 may be located on two intersecting walls, and the embodiments of the present application are not limited thereto.

It should be understood that, as shown in Figs. 2 and 3, the discharge passage 13 in the embodiments of the present application may include a first passage 131 and/or a second passage 132. The first passage 131 is configured to discharge emissions, which are discharged from the pressure relief mechanism 211, to the electrical cavity 11a; and the second passage 132 is configured to discharge the emissions, which are discharged from the pressure relief mechanism 211, out ofthe electrical cavity 11a.

If the battery 10 includes the first passage 131 but not the second passage 132, the emissions discharged through the pressure relief mechanism 211 of the battery cell 20 will be discharged through the first passage 131 to the electrical cavity 11a where the battery cell 20 is located, and there is no need to provide other additional passages to discharge the emissions out of the electrical cavity 11a, so that the structure of the box 11 is simple and easy to implement. However, the emissions discharged from the battery cell 20 have the characteristics of high temperature and high pressure, and may contain a large number of metal particle. If all the emissions are directly discharged to the electrical cavity 11a, it is likely to cause a short circuit between battery cells 20, and it is also likely to cause heat diffusion, thereby causing the battery 10 to explode, which is detrimental to the safety of the battery 10.

Therefore, the battery 10 may also be provided with the second passage 132. Specifically, if the battery 10 includes the second passage 132 but not the first passage 131, it is necessary for the emissions discharged through the pressure relief mechanism 211 of the battery cell 20 to be completely discharged out of the electrical cavity 11b through the second passage 132, and the emissions do not affect the battery cell 20 in the electrical cavity 11b at all, so that heat diffusion and short circuit of the battery cells 20 caused by emissions can be effectively avoided, thereby improving the safety of the battery 10. Moreover, due to the second passage 132, the emissions from the battery cells 20 can be collected in a centralized manner to avoid the influence of the emissions on other components.

Alternatively, the battery 10 may include both the first passage 131 and the second passage 132. When thermal runaway or other abnormal conditions occur in the battery cell 20, high-temperature and high-pressure emissions generated inside the battery cell 20 are discharged in the direction of the pressure relief mechanism 211 provided in the battery cell 20, and the power and destructive force of such emissions are generally so great that if only one passage is provided, it is very likely to break through the structure of this passage or break through one or more structures provided around this passage, resulting in a further safety problem. Therefore, the emissions discharged through the pressure relief mechanism 211 can be discharged jointly through two passages, so that it is possible to not only increase the discharge speed and reduce the risk of explosion of the battery 10, but also to achieve directional and dispersed discharge to avoid the influence of the emissions on other components, to improve the safety and stability of the battery 10.

For ease of illustration, the embodiments of the present application mainly take the discharge passage 13 of the battery 10 including the first passage 131 and the second passage 132 as an example, but the embodiments of the present application are not limited thereto.

Specifically, as shown in Figs. 2 and 3, the box 11 in the embodiments of the present application may further include: a collection cavity 11b for collecting and/or processing the emissions discharged through the pressure relief mechanism 211 when the pressure relief mechanism 211 is actuated. For example, the collection cavity may be configured to collect the emissions discharged through the second passage 132 when the pressure relief mechanism 211 is actuated, and the emissions are then discharged to the outside of the battery 10. The collection cavity 11b is configured to collect the emissions, and may be sealed or unsealed. In some embodiments, the collection cavity 11b may contain air or another gas. Optionally, the collection cavity 11b may also contain liquid, such as a cooling medium, or a component for accommodating the liquid is provided to further cool the emissions entering the collection cavity 11b. Further, optionally, the gas or the liquid in the collection cavity 11b flows in a circulating manner.

Optionally, as shown in Figs. 2 and 3, the battery 10 in the embodiments of the present application further includes: an isolation component 114 configured to isolate the electrical cavity 11a from the collection cavity 11b. The so-called "isolation" here refers to separation, which may not be sealed. Specifically, the electrical cavity 11a and the collection cavity 11b are isolated from each other by the isolation component 114, that is, the electrical cavity 11a for accommodating the battery cell 20 is separated from the collection cavity 11b for collecting the emissions.

In the embodiments of the present application, the isolation component 114 may include a wall shared by the electrical cavity 11a and the collection cavity 11b. As shown in Figs. 2 and 3, the isolation component 114 (or a part thereof) may be directly used as the wall shared by the electrical cavity 11a and the collection cavity 11b, so that the distance between the electrical cavity 11a and the collection cavity 11b can be reduced as much as possible, saving space, and improving the space utilization rate of the box 11.

Optionally, the isolation component 114 in the embodiments of the present application may be a thermal management component configured to regulate the temperature of the battery cell 20. Specifically, the isolation component 114 may be configured to accommodate a fluid to regulate the temperature of the battery cell 20. In the case of cooling the battery cell 20, the isolation component 114 may accommodate a cooling medium to regulate the temperature of the battery cell 20. In this case, the isolation component 114 may also be called a cooling component, a cooling system, a cooling plate, etc. In addition, the isolation component 114 may also be used for heating, which will not be limited in the embodiments of the present application. Optionally, the fluid in the isolation component 114 may flow in a circulating manner to achieve a better temperature regulation effect.

It should be understood that the box 11 in the embodiments of the present application may be implemented in various ways, which will not be limited in the embodiments of the present application. For example, taking Figs. 2 and 3 as an example, for the electrical cavity 11a, the box 11 may include a first enclosure body 110 having an opening, and the isolation component 114 covers the opening of the first enclosure body 110. In this way, the wall for forming the electrical cavity 11a includes the first enclosure body 110 and the isolation component 114. The first enclosure body 110 may also be implemented in various ways. For example, the first enclosure body 110 may be of a hollow integral structure with an opening at one end; or the first enclosure body 110 may include a first part and a second part with openings on two opposite sides respectively, the first part covers the opening on one side of the second part, so as to form the first enclosure body 110 with an opening at one end, and the isolation component 114 covers the opening on the other side of the second part to form the electrical cavity 11a. As for the corresponding collection cavity 11b, the box 11 may further include: a protective member 115. The protective member 115 is configured to protect the isolation component 114. The protective member 115 and the isolation component 114 may form the collection cavity 11b, that is, the wall of the collection cavity 11b includes the protective member 115 and the isolation component 114.

For another example, unlike the aforementioned manner shown in Figs. 2 and 3, the box 11 may further include a closed second enclosure body, which may be configured to form an electrical cavity 11a, or by providing the isolation component 114 inside the enclosure body, the electrical cavity 11a is isolated inside the enclosure body. Further, a collection cavity 11b may also be isolated. The second enclosure body may also be implemented in various ways. For example, the second enclosure body may include a third part and a fourth part, one side of the fourth part has an opening to form a semi-closed structure, the isolation component 114 is provided inside the fourth part, and the third part covers the opening of the fourth part to form the closed second enclosure body.

For ease of description, the present application is described mainly taking the box 11 as shown in Figs. 2 and 3 as an example, but the embodiments of the present application are not limited thereto.

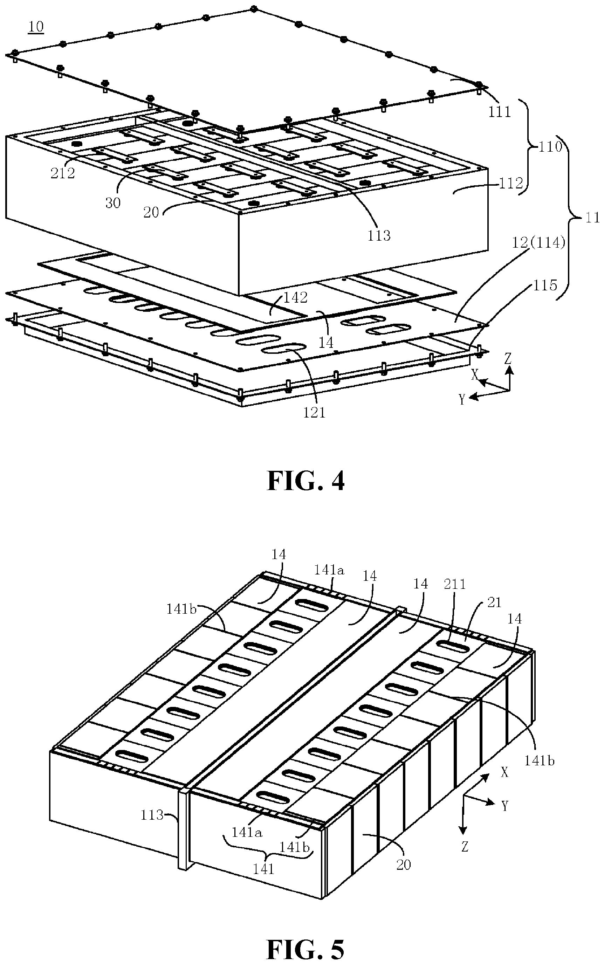

Fig. 4 shows an exploded schematic structural diagram of a battery 10 according to an embodiment of the present application. For example, Fig. 4 may correspond to the battery 10 as described in Fig. 2. As shown in Fig. 4, the battery 10 in the embodiments of the present application may include: a box 11. The box 11 includes a first enclosure body 110, an isolation component 114 and a protective member 115. The first enclosure body 110 and the isolation component 114 may be configured to form the electrical cavity 11a, and the isolation component 114 and the protective member 115 may be configured to form the collection cavity 11b. Specifically, as shown in Fig. 4, the first enclosure body 110 may further include a first part 111 and a second part 112 with openings on two opposite sides respectively. The first part 111 is configured to cover the opening on one side of the second part 112, so as to form the first enclosure body 110 with an opening at one end, and the isolation component 114 is configured to cover the opening on the other side ofthe second part 112 to form the electrical cavity 11a.

In the embodiments of the present application, the electrical cavity 11a has a plurality of walls, and the pressure relief mechanism 211 is provided on the first wall 21 of the battery cell 20. The first wall 21 may be any wall of the battery cell 20 facing the electrical cavity 11a. It should be understood that the battery cell 20 in the embodiments of the present application may be shaped according to the actual application. For example, the present application is described mainly taking a rectangular battery cell 20 as an example, but the embodiments of the present application are not limited thereto. For example, the battery cell 20 may alternatively be cylindrical or of other shapes. The first wall 21 may be any wall of the battery cell 20.

In the embodiments of the present application, as shown in Fig. 4, the electrical cavity 11a includes a second wall 12, and the first wall 21 faces the second wall 12. That is, the pressure relief mechanism 211 of the battery cell 20 faces the wall of the electrical cavity 11a rather than other battery cells 20, so that it is possible to facilitate the provision of an avoidance structure on the wall of the electrical cavity 11a for providing an avoidance space for the deformation of the pressure relief mechanism 211, the space utilization rate of the battery 10 can be increased, and the risk of the battery cell 20 that is subjected to thermal runaway causing thermal runaway in other battery cells 20 can also be reduced, thereby improving the safety of the battery 10.

For example, in Fig. 4, taking an example in which the first wall 21 of the battery cell 20 where the pressure relief mechanism 211 is located faces the isolation component 114, the isolation component 114 is configured to form at least part of the second wall 12. Specifically, as shown in Fig. 4, the pressure relief mechanism 211 is provided on the first wall 21 of the battery cell 20, which first wall 21 is the bottom wall of the battery cell 20; and the isolation component 114 serves as at least part of the second wall 12 of the electrical cavity 11a. The first wall 21 faces the isolation component 114. Moreover, the isolation component 114 is configured to isolate the electrical cavity 11a from the collection cavity 11b, and the isolation component 114 may also be configured to form at least part of the second passage 132, so that the emissions passing through the pressure relief mechanism 211 can be discharged out of the electrical cavity 11a through the isolation component 114. For ease of description, an example in which the second wall 12 is defined as the isolation component 114 is mainly taken in the embodiments of the present application, but the embodiments of the present application are not limited thereto.

For example, the second wall 12 may also be another wall of the electrical cavity 11a of the box 11. For example, the second wall 12 may also be any wall of the second part 112.

For another example, as shown in Fig. 4, the box 11 further includes at least one beam 113. The beam 113 is located between the plurality of battery cells 20. The beam 113 may be configured to increase the structural strength of the box 11. In addition, the beam 113 may also be configured to divide the electrical cavity 11a into at least two electrical sub-cavities. For example, when one beam 113 is provided in the box 11 in Fig. 4, the beam 113 can divide the electrical cavity 11a into two electrical sub-cavities on the left and right sides, and the beam 113 can also be regarded as one of the walls of the electrical cavity 11a.

Therefore, the second wall 12 may also be defined as the beam 113, but the embodiments of the present application are not limited thereto. Specifically, the beam 113 may be of a hollow structure, which may be configured to form the collection cavity 11b, that is, the beam 113 includes a wall shared by the electrical cavity 11a and the collection cavity 11b. Specifically, the isolation component 114 and the protective member 115 may be configured to form part of the collection cavity 11b, and the hollow structure of the beam 113 may also be configured to form part of the collection cavity 11b, that is, the part of the collection cavity 11b formed by the isolation component 114 and the protective member 115 is in communication with the hollow structure of the beam 113, so that when the pressure relief mechanism 211 is arranged facing the beam 113, that is, when the beam 113, as the second wall 12, is arranged facing the first wall 21 where the pressure relief mechanism 211 is located, the emissions discharged through the pressure relief mechanism 211 can pass through the beam 113 into the collection cavity 11b.

It should be understood that, for ease of illustration, an example in which the isolation component 114 is used as the second wall 12 is mainly taken in the embodiments of the present application, but the embodiments of the present application are not limited thereto, and the relevant descriptions are equally applicable to the case where the beam 113 is used as the second wall 12 or another wall of the electrical cavity 11a is used as the second wall 12, which will not be repeated herein for the sake of brevity.

In the embodiments of the present application, as shown in Fig. 4, the target structure includes the second wall 12. That is, the emissions discharged from the pressure relief mechanism 211 can be discharged out of the battery cell 20 through the second wall 12. In this way, by rationally setting the melting point of the second wall 12, the emissions discharged from the pressure relief mechanism 211 can quickly damage the second wall 12 and be discharged out of the battery cell 20, thereby improving the safety of the battery 10.

Optionally, at least part of the first passage 131 in the embodiments of the present application may be provided between the first wall 21 and the second wall 12. The first passage 131 may be implemented in a variety of ways. For example, as shown in Figs. 2 to 4, the battery 10 further includes: a connection structure 14. The connection structure 14 is arranged between the first wall 21 and the second wall 12, the connection structure 14 is configured to form part of the first passage 131, and the target structure includes the connection structure 14. The use of the connection structure 14 to implement at least part of the first passage 131 can achieve the relative fixation between the first wall 21 and the second wall 12 and the sealing between the first wall 21 and the second wall 12 by means of the connection structure 14 when no battery cell 20 is subjected to thermal runaway, and can also adjust the position of the first passage 131 by rationally setting the specific form and position of the connection structure 14, so that the directional discharge of the emissions through the first passage 131 can thus be realized, thereby improving the safety of the battery 10. In addition, where the target structure includes the connection structure 14, by rationally setting the melting point of the connection structure 14, the emissions passing through the pressure relief mechanism 211 can be smoothly discharged through at least part of the first passage 131 formed by the connection structure 14, thereby improving the safety of the battery 10.

In the embodiments of the present application, the connection structure 14 can implement at least part of the first passage 131 in a variety of ways. Fig. 5 shows a partial schematic structural diagram of a battery 10 according to an embodiment of the present application. For example, Fig. 5 may be a partial schematic structural diagram of the battery 10 shown in Fig. 4, and Fig. 5 is a top schematic structural diagram of the battery 10. For example, as shown in Figs. 4 and 5, the connection structure 14 is provided with a flow channel 141, and the first passage 131 includes the flow channel 141. The emissions discharged through the pressure relief mechanism 211 can be discharged into the electrical cavity 11a through the flow channel 141, so that by rationally arranging the position of the flow channel 141, directional discharge of the emissions can be realized, to reduce the influence of the emissions on individual components inside the electrical cavity 11a, thereby improving the safety of the battery 10.

Specifically, as shown in Figs. 4 and 5, the flow channel 141 in the embodiments of the present application includes a through hole and/or groove that penetrates through the connection structure 14, thereby facilitating the machining and also enabling the emissions to pass through quickly.

It should be understood that the dimensions of the flow channel 141 in the embodiments of the present application may be set according to the actual application. For example, the radial dimension of the flow channel 141 is less than or equal to 2 mm, with the radial direction of the flow channel 141 being perpendicular to the direction of flow of the emissions within the flow channel 141, so as to prevent the flow channel 141 from being over-sized, which also prevents an excessive amount of emissions flowing through the flow channel 141, can also prevent the emissions flowing through the flow channel 141 from having large particle sizes for filtering the emissions, and in turn can reduce the influence of the emissions from the battery cell 10 subjected to thermal runaway on other battery cells 20, to avoid heat diffusion of the battery 10 as much as possible. Specifically, if the flow channel 141 is a through hole, the radial dimension of the flow channel 141 may be a maximum value of the hole diameter of the flow channel 141; and if the flow channel 141 is a groove, the radial dimension of the flow channel 141 may be a maximum value of the depth of the groove or the width of the groove, and the embodiments of the present application are not limited thereto.

It should be understood that a filler may be provided in the flow channel 141, the connection structure 14 includes the filler, and the target structure includes the filler. By rationally setting the melting point of the filler, the filler can be used to seal the flow channel 141 when the pressure relief mechanism 211 is not actuated, and can be damaged, such as melted, to make the flow channel 141 open when the pressure relief mechanism 211 is actuated. In this way, the sealing performance of the electrical cavity 11a can be improved when no battery cell 20 is subjected to thermal runaway, so as to prevent the battery cell 20 from being affected or damaged. The material of the filler may be selected according to the actual application. For example, the material of the filler may include polyurethane foam and/or plastic, but the embodiments of the present application are not limited thereto.

In the embodiments of the present application, the flow channel 141 is a groove provided on the connection structure 14 as an example. As shown in Figs. 4 and 5, the connection structure 14 may include a plurality of flow channels 141. The plurality of flow channels 141 may include: grooves provided on a surface of the connection structure 14 facing the first wall 21, that is, openings of the grooves face the surface of the first wall 21; and/or grooves provided on a surface ofthe connection structure 14 facing the second wall 12, that is, openings of the grooves face the second wall 12. For example, in Figs. 4 and 5, an example is taken in which the flow channels 141 are grooves provided on the surface of the connection structure 14 facing the second wall 12, that is, the openings of the grooves face the second wall 12.

In some embodiments, the connection structure 14 is provided with a plurality of flow channels 141 extending in at least one direction, the at least one direction being parallel to the first wall 21. That is, a plurality of flow channels 141 extending in one or more directions are provided on a surface of the connection structure 14 that has a large area. The provision of a plurality of flow channels 141 can disperse the discharge directions of the emissions to avoid damage to components in a single direction when the high-temperature emissions are discharged in that direction.

It should be understood that the extension direction of the flow channel 141 in the embodiments of the present application may be set according to the actual application. For example, the extension direction of the flow channel 141 may be rationally arranged according to the positional relationship between the electrode terminals 212 of the battery cell 20 and the pressure relief mechanism 211, so as to avoid the influence of the emissions on the electrode terminals 212 and the bus component 30 connected to the electrode terminals 212.

For example, as shown in Figs. 4 and 5, where the electrode terminals 212 are not provided on the same wall as the pressure relief mechanism 211, and the wall on which the electrode terminals 212 are provided does not intersect with the first wall 21, for example, when the wall on which the electrode terminals 212 are provided is arranged opposite the first wall 21, the extension direction of the flow channel 141 may not be limited. For example, the flow channel 141 may include: one or more X-direction first flow channels 141a provided on the connection structure 14 and extending in a first direction X; and/or one or more Y-direction second flow channels 141b provided on the connection structure 14 and extending in a second direction Y. Alternatively, the flow channel 141 may also include flow channels in other directions provided on the connection structure 14, and the embodiments of the present application are not limited thereto. The first direction X and the second direction Y are perpendicular to each other. For example, as shown in Figs. 4 and 5, the first direction X may be the thickness direction of the battery cell 20. In addition, the height direction Z of the battery cell 20 in the embodiments of the present application is perpendicular to the first direction X and the second direction Y.

For another example, different from what are shown in Figs. 4 and 5, the electrode terminals 212 are provided on another wall. For example, the electrode terminals 212 are located on a wall which intersects with the first wall 21, or the electrode terminals 212 are located on the first wall 21, then it is possible to avoid the influence of the emissions on the electrode terminals 212 by rationally arranging the direction of the flow channel 141. For example, a short circuit between different bus components 30 connected to the electrode terminals 212 that is caused by metallic debris in the emissions can be avoided, thereby improving the safety of the battery 10.

In the embodiments of the present application, the connection structure 14 may also form at least part of the first passage 131 in other ways. For example, the connection structure 14 is configured to be damaged when the pressure relief mechanism 211 is actuated, so as to form a gap between the first wall 21 and the second wall 12, and the first passage 131 includes the gap. In this way, the target structure configured to form the first passage 131 may include the connection member 14, and by rationally selecting the material ofthe connection structure 14 to obtain the appropriate melting point of the connection structure 14, the connection structure 14 can be damaged when the pressure relief mechanism 211 is actuated, to form a gap, so as to form the first passage. It is possible to provide no additional structures on the connection structure 14, which is more convenient, and also to ensure the sealing of the battery cell 20 during normal use.

Specifically, the connection structure 14 being damaged in the embodiments of the present application may include: at least part of the connection structure 14 being damaged. For example, when the pressure relief mechanism 211 is actuated, the connection structure 14 may only be externally damaged, and some internal components of the connection structure 14 that are exposed will not be damaged; or the internal structure of the connection structure 14 is damaged, for example, the connection structure 14 may be a multi-layer structure and some of the structural layers in the multi-layer structure are damaged; or the connection structure 14 may be damaged in its entirety, and the embodiments of the present application are not limited thereto.

In the embodiments of the present application, as shown in Figs. 4 and 5, the connection structure 14 is provided with an avoidance opening 142 corresponding to the pressure relief mechanism 211. The avoidance opening 142 is configured to provide a deformation space for the pressure relief mechanism 211 when it is actuated, so as to avoid untimely actuation of the pressure relief mechanism 211 caused by the connection structure 14 blocking the pressure relief mechanism 211, and the emissions passing through the pressure relief mechanism 211 can be quickly discharged through the avoidance opening 142.

It should be understood that the avoidance opening 142 located at the connection structure 14 may be used to provide the deformation space for the pressure relief mechanism 211, so that the emissions passing through the pressure relief mechanism 211, after being discharged out of the battery cell 20, will flow out through the avoidance opening 142. The avoidance opening 142 can be regarded as at least part of the first passage 131, and the emissions can be discharged to the electrical cavity 11a through the avoidance opening 142. In addition, the avoidance opening 142 may also be regarded as at least part of the second passage 132, and the emissions can then be discharged out of the electrical cavity 11a through the avoidance opening 142, but the embodiments of the present application are not limited thereto.

As shown in Figs. 4 and 5, the avoidance opening 142 corresponds to at least one pressure relief mechanism 211. Optionally, considering that a plurality of battery cells 20 within the battery 10 are generally arranged in a certain order, the avoidance opening 142 may correspond to a plurality of pressure relief mechanisms 211 at the same time to facilitate machining. For example, the avoidance opening 142 provided in the connection structure 14 may correspond to a row of battery cells 20, but the embodiments of the present application are not limited thereto.

It should be understood that the connection structure 14 in the embodiments of the present application can be configured according to the actual application. For example, the connection structure 14 may include at least one of a holder, a thermally conductive pad, a sealing gasket and an adhesive provided between the first wall 21 and the second wall 12. Specifically, the connection structure 14 may include a holder provided between the first wall 21 and the second wall 12 for supporting and fixing the battery cell 20.

Optionally, the connection structure 14 may include a thermally conductive pad provided between the first wall 21 and the second wall 12, through which heat dissipation for the battery cell 20 can be performed during use of the battery 10. For example, when the second wall 12 is a thermal management component, then the heat from the battery cell 20 can be transferred to the thermal management component via the thermally conductive pad, so as to adjust the temperature of the battery cell 20 in a timely manner to ensure the normal use of the battery cell 20. For example, as shown in Figs. 4 and 5, the connection structure 14 may include a thermally conductive pad, which may be a portion provided with a plurality of Y-direction flow channels 141b extending in the second direction Y in the figures.

Optionally, the connection structure 14 may include a sealing gasket provided between the first wall 21 and the second wall 12 to improve the sealing performance between the first wall 21 and the second wall 12. For example, as shown in Figs. 4 and 5, the connection structure 14 may include a sealing gasket, which may be a portion provided with a plurality of X-direction first flow channels 141a extending in the first direction X in the figures.

Optionally, the connection structure 14 may include an adhesive provided between the first wall 21 and the second wall 12, which may be configured to adhere and fix the battery cell 20 to the second wall 12. For example, the connection structure 14 includes an adhesive that can be used to fix the battery cell 20 to the second wall 12.

It should be understood that the thermally conductive pad, the sealing gasket and the adhesive can be used alone or in combination. For example, as shown in Figs. 4 and 5, the sealing gasket may be provided on an edge of at least one side of the thermally conductive pad. For example, sealing gaskets may be respectively provided on edges of two opposite sides of the thermally conductive pad, so that they can be used for heat dissipation and improve the sealing performance between the first wall 21 and the second wall 12. In addition, the adhesive may be configured to fix the sealing gasket and the thermally conductive pad to the battery cell 20 or to the second wall 12, to improve the stability of the battery 10.

It should be understood that the material of the thermally conductive pad, the material of the sealing gasket and the material of the adhesive in the embodiments of the present application may be selected according to the actual application. For example, the material of the thermally conductive pad may include a thermally conductive silicone. For another example, the material of the sealing gasket includes at least one of silicone rubber, polypropylene (PP), polyfluoroalkoxy (PFA), and polyimide (PI). For example, the material of the adhesive includes at least one of: an epoxy-type structural adhesive, an acrylate structural adhesive, a polyimide structural adhesive, a maleimide structural adhesive, a polyurethane structural adhesive, and a subglue. For another example, the material of the adhesive layer includes a polymer adhesive and a thermally conductive material. The material of the polymer adhesive includes at least one of: an epoxy resin, an organosilicone, and a polyimide, and the thermally conductive material includes at least one of: Al2O3, ZnO, BeO, AlN, Si3N4, BN, SiC, B4C, a carbon nanotube, and a graphite nanosheets, but the embodiments of the present application are not limited thereto.

Optionally, the first passage 131 in the embodiments of the present application may also be implemented in other ways. For example, a gap may also be provided between the first wall 21 and the second wall 12 in the embodiments of the present application, and the gap is used to form part of the first passage 131. In this way, the sealing requirements for the electrical cavity 11a can be reduced, especially the sealing requirements for the second wall 12 can be reduced, so that the difficulty of machining of the battery 10 can be reduced, thereby improving the machining efficiency of the battery 10.

It should be understood that the approach for implementing at least part of the first passage 131 by means of the connection structure 14 and the approach for implementing at least part of the first passage 131 by means of the gap between the first wall 21 and the second wall 12 may be used alone or in combination with each other. For example, at least part of the first passage 131 can be jointly implemented by means of the connection structure 14 and the gap between the first wall 21 and the second wall 12, but the embodiments of the present application are not limited thereto.

The second passage 132 in the embodiments of the present application will be described below by way of example with reference to the accompanying drawings.

In the embodiments of the present application, as shown in Figs. 4 and 5, the second wall 12 is provided with a pressure relief region 121 corresponding to the pressure relief mechanism 211. The pressure relief region 121 is configured to form at least part of the second passage 132. The second wall 12 is a wall of the electrical cavity 11a, and the emissions discharged through the pressure relief mechanism 211 can be discharged out of the electrical cavity 11a through the pressure relief region 121 of the second wall 12, that is, the pressure relief region 121 is at least part of the second passage 132 to discharge the emissions. For example, the emissions may be discharged to the collection cavity 11b to prevent a large amount of emissions from entering the electrical cavity 11a, which would otherwise cause a short circuit or heat diffusion between battery cells 20 and thus affect the safety of the battery 10.

It should be understood that each pressure relief region 121 provided in the second wall 12 may correspond to one or more pressure relief mechanisms 211. For example, as shown in Fig. 4, the second wall 12 is provided with a plurality of pressure relief regions 121. The plurality of pressure relief regions 121 are in one-to-one correspondence with the pressure relief mechanisms 211 of the plurality of battery cells 20. For another example, the second wall 12 is provided with one or more pressure relief regions 121, and each pressure relief region 121 may correspond to a plurality of pressure relief structures 211, but the embodiments of the present application are not limited thereto.

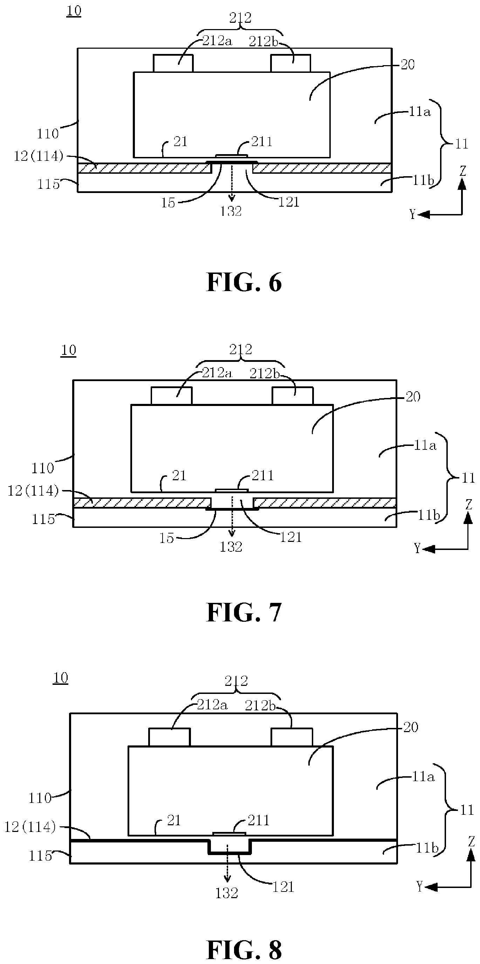

It should be understood that the pressure relief region 121 in the embodiments of the present application may be implemented in a variety of ways. Figs. 6 and 7 respectively show possible schematic structural diagrams of a battery 10 according to the embodiments of the present application. As shown in Figs. 6 and 7, the pressure relief region 121 is a through hole penetrating the second wall 12 in a penetrating direction which is a thickness direction of the second wall 12, and the second passage 132 includes the through hole. When the pressure relief region 121 is a through hole, the machining is facilitated, and the emissions discharged through the pressure relief mechanism 211 can be also released quickly. However, when the pressure relief region 121 is a through hole, the pressure relief mechanism 211 is exposed as a result. Then, during the use of the battery 10, the pressure relief mechanism 211 is likely to be affected by the external environment, which may in turn cause the pressure relief mechanism 211 to fail.

Therefore, optionally, as shown in Figs. 6 and 7, the battery 10 further includes: a sealing structure 15. The sealing structure 15 is configured to seal the through hole, the sealing structure 15 is configured to be damaged when the pressure relief mechanism 211 is actuated, such that the through hole forms at least part of the second passage 132, and the target structure includes the sealing structure 15. When the pressure relief region 121 is a through hole, by rationally setting the melting point of the sealing structure 15, it is possible to maintain the sealing of the electrical cavity 11a during the normal use of the battery cell 20, to protect the pressure relief mechanism 211 from being affected by the external environment; and when a battery cell 20 is subjected to thermal runaway, the sealing structure 15 can be damaged in a timely manner to expose the through hole and form the second passage 132, and the emissions from the battery cell 20 then pass through the through hole and are discharged out of the electrical cavity 11a, thereby avoiding thermal runaway and improving the safety of the battery 10.

Optionally, the position of the sealing structure 15 in the embodiments of the present application may be set according to the actual application. For example, as shown in Fig. 6, the sealing structure 15 is provided on a surface of the second wall 12 facing the first wall 21; and/or as shown in Fig. 7, the sealing structure 15 is provided on a surface of the second wall 12 away from the first wall 21, for facilitating the machining. In addition, as shown in Fig. 6, when the sealing structure 15 is provided on the surface of the second wall 12 facing the first wall 21, the sealing structure 15 is relatively close to the pressure relief mechanism 211 and can be quickly damaged by the emissions from the pressure relief mechanism 211 to avoid affecting the actuation of the pressure relief mechanism 211, and the emissions can be discharged to the collection cavity 11b in a timely manner. As shown in Fig. 7, when the sealing structure 15 is provided on the surface of the second wall 12 away from the first wall 21, the distance between the pressure relief mechanism 211 and the sealing structure 15 can provide a deformation space for the actuation of the pressure relief mechanism 211, avoiding affecting the pressure relief mechanism 211.

Fig. 8 shows a further possible schematic structural diagram of a battery 10 according to the embodiments of the present application. As shown in Fig. 8, the pressure relief region 121 is a weak region of the second wall 12, the weak region being configured to be damaged when the pressure relief mechanism 211 is actuated, so as to form at least part of the second passage 132. When the pressure relief mechanism 211 is actuated, the weak region can be damaged, so that the emissions from the battery cell 20 provided with the pressure relief mechanism 211 are discharged out of the electrical cavity 11a through the weak region, for example, may pass through the weak region into the collection cavity 11b. Configuring the pressure relief region 121 as a weak region can also make the second wall 12 in a sealed state when the pressure relief mechanism 211 is not actuated, for example, during normal use of the battery 10, effectively protecting the pressure relief mechanism 211 from being damaged and failing due to external force. When a battery cell 20 is subjected to thermal runaway, the pressure relief mechanism can be damaged in a timely manner to discharge the emissions out of the electrical cavity 11a to avoid thermal runaway and improve the safety of the battery 10.

It should be understood that, the target structure includes the weak region, the melting point of the weak region can then be rationally set such that the weak region has a sufficient strength to maintain the sealing of the electrical cavity 11a during normal use of the battery cell 20, to protect the pressure relief mechanism 211 from being affected by the external environment; and when the battery cell 20 is subjected to thermal runaway, the weak region can be damaged in a timely manner, for example, melted in a timely manner, to form the second passage 132, and the emissions from the battery cell 20 are then discharged out of the electrical cavity 11a through the damaged pressure relief region 121, thereby avoiding thermal runaway and improving the safety of the battery 10.

The weak region in the embodiments of the present application may also be configured in other ways to facilitate damage by the emissions, which will not be limited in the embodiments of the present application. For example, the thickness of the weak region is less than the thickness of a region of the second wall 12 that is located around the weak region. The strength of the weak region is reduced by reducing the thickness thereof, such that the emissions can quickly damage the weak region by means of melting and breaking, and the emissions can be discharged in a timely manner.

In the embodiments of the present application, as shown in Fig. 2, the second wall 12 is provided with a groove, which corresponds to the pressure relief mechanism 211 and has an opening facing the pressure relief mechanism 211, and the weak region is a bottom wall of the groove. In this way, the opening of the groove corresponds to the pressure relief mechanism 211, and the inside of the groove can provide a deformation space for the pressure relief mechanism 211; and the bottom wall is configured as a weak region to facilitate machining.

It should be understood that the first passage 131 in the embodiments of the present application can discharge the emissions, which are discharged through the pressure relief mechanism 211, to the electrical cavity 11a. Further, a wall of the box 11 of the battery 10 may be provided with a first balance valve. The first balance valve is configured to discharge the emissions, which have passed through the first passage 131, out of the box 11, to avoid heat diffusion caused by the accumulation of the emissions in the box 11, thereby improving the safety of the battery 10. Specifically, the first balance valve may be provided on the wall configured to form the electrical cavity 11a, so as to discharge the emissions out of the electrical cavity 11a in a timely manner.

Similarly, the second passage 132 may discharge the emissions, which are discharged through the pressure relief mechanism 211, out of the electrical cavity 11a. For example, if no collection cavity 11b is provided, the emissions can be discharged directly out of the box 11. For another example, it is also possible to provide a collection cavity 11b to discharge the emissions to the collection cavity 11b. However, the space of the collection cavity 11b is limited. Therefore, a wall of the box 11 may be provided with a second balance valve. The second balance valve is configured to discharge the emissions, which are discharged through the second passage 132, out of the box 11, for example, the emissions can be discharged out of the battery 10 from the collection cavity 11b to avoid heat diffusion or exploding caused by the accumulation of the emissions in the collection cavity 11b of the box 11, thereby improving the safety of the battery 10. Specifically, the second balance valve may be provided on the wall configured to form the collection cavity 11b, so as to discharge the emissions out of the collection cavity 11b in a timely manner.

The battery 10 of the embodiments of the present application includes a box 11, a battery cell 20 and a discharge passage 13. The battery cell 20 is accommodated in an electrical cavity 11a of the box 11. A first wall 21 of the battery cell 20 is provided with a pressure relief mechanism 211. The discharge passage 13 can be connected to the inside of the battery cell 20 via the pressure relief mechanism 211 when the pressure relief mechanism 211 is actuated, so that emissions inside the battery cell 20 can be discharged through the pressure relief mechanism 211 and the discharge passage 13. Further, the battery 10 satisfies: 0.05 wh/(kg • °C) ≤ a/b ≤ 25 wh/(kg • °C), where a is the gravimetric energy density of the battery cell 20, and b is the melting point of a target structure configured to form the discharge passage 13. By rationally setting the value of a/b, the emissions inside the battery cell 20 can be discharged in a timely manner, thereby improving the safety of the battery 10.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery, comprising:
a box (11), comprising an electrical cavity (11a);
a battery cell (20) accommodated in the electrical cavity (11a), a first wall (21) of the battery cell (20) being provided with a pressure relief mechanism (211); and
a discharge passage (13) configured to be in communication with the inside of the battery cell (20) via the pressure relief mechanism (211) when the pressure relief mechanism (211) is actuated;
wherein the battery satisfies: 0.05 wh/(kg • °C) ≤ a/b ≤ 25 wh/(kg • °C),
where a is the gravimetric energy density of the battery cell (20), and b is the melting point of a target structure configured to form the discharge passage (13).

2. The battery according to claim 1, wherein the battery satisfies: 0.06 wh/(kg • °C) ≤ a/b ≤ 15 wh/(kg • °C).

3. The battery according to claim 1 or 2, wherein a value range of the gravimetric energy density a of the battery cell (20) is [100 wh/kg, 3505 wh/kg].

4. The battery according to any one of claims 1 to 3, wherein a value range of the melting point b of the target structure is [100°C, 2000°C].

5. The battery according to any one of claims 1 to 4, wherein the electrical cavity (11a) comprises a second wall (12), and the first wall (21) faces the second wall (12).

6. The battery according to claim 5, wherein the target structure comprises the second wall (12).

7. The battery according to claim 5 or 6, wherein the discharge passage (13) comprises a first passage (131), the first passage (131) being configured to discharge emissions, which are discharged from the pressure relief mechanism (211), to the electrical cavity (11a).

8. The battery according to claim 7, further comprising:
a connection structure (14), wherein the connection structure (14) is arranged between the first wall (21) and the second wall (12), the connection structure (14) is configured to form part of the first passage (131), and the target structure comprises the connection structure (14).

9. The battery according to claim 8, wherein the connection structure (14) is provided with a flow channel (141), and the first passage (131) comprises the flow channel (141).

10. The battery according to claim 8 or 9, wherein the connection structure (14) is configured to be damaged when the pressure relief mechanism (211) is actuated, so as to form a gap between the first wall (21) and the second wall (12), and the first passage (131) comprises the gap.

11. The battery according to any one of claims 8 to 10, wherein the connection structure (14) is provided with an avoidance opening (142) corresponding to the pressure relief mechanism (211), the avoidance opening (142) being configured to provide a deformation space for the pressure relief mechanism (211) when the pressure relief mechanism is actuated.

12. The battery according to any one of claims 5 to 11, wherein the discharge passage (13) comprises a second passage (132), the second passage (132) being configured to discharge the emissions, which are discharged from the pressure relief mechanism (211), out of the electrical cavity (11a).

13. The battery according to claim 12, wherein the second wall (12) is provided with a pressure relief region (121) corresponding to the pressure relief mechanism (211), the pressure relief region (121) being configured to form at least part of the second passage (132).

14. The battery according to claim 13, wherein the pressure relief region (121) is a through hole penetrating the second wall (12) in a penetrating direction which is a thickness direction of the second wall (12), and the second passage (132) comprises the through hole.

15. The battery according to claim 14, further comprising:
a sealing structure (15), wherein the sealing structure (15) is configured to seal the through hole, the sealing structure (15) is configured to be damaged when the pressure relief mechanism (211) is actuated, such that the through hole forms at least part of the second passage (132), and the target structure comprises the sealing structure (15).

16. The battery according to claim 15, wherein the sealing structure (15) is provided on a surface of the second wall (12) facing the first wall (21), and/or
the sealing structure (15) is provided on a surface of the second wall (12) away from the first wall (21).

17. The battery according to claim 13, wherein the pressure relief region (121) is a weak region of the second wall (12), the weak region being configured to be damaged when the pressure relief mechanism (211) is actuated, so as to form at least part of the second passage (132).

18. The battery according to claim 17, wherein the target structure comprises the weak region.

19. The battery according to claim 17 or 18, wherein the thickness of the weak region is less than the thickness of a region of the second wall (12) that is located around the weak region.

20. The battery according to any one of claims 17 to 19, wherein the second wall (12) is provided with a groove, which corresponds to the pressure relief mechanism (211) and has an opening facing the pressure relief mechanism (211), and the weak region is a bottom wall of the groove.

21. The battery according to any one of claims 12 to 20, wherein the box (11) further comprises:
a collection cavity (11b) configured to collect the emissions discharged through the second passage (132) when the pressure relief mechanism (211) is actuated.

22. The battery according to claim 21, further comprising:
an isolation component (114) configured to isolate the electrical cavity (11a) from the collection cavity (11b).

23. The battery according to claim 22, wherein the isolation component (114) is configured to form at least part of the second passage (132).

24. An electrical device, comprising:
a battery according to any one of claims 1 to 23, the battery being configured to supply electrical energy to the electrical device.
